# FASCICULE DE BREVET EUROPEEN

(11) **EP 0 605 311 B1**
(45) Date de publication et mention de la délivrance du brevet: **10.11.1999**
(21) Numéro de dépôt: 93403176.6
(22) Date de dépôt: 27.12.1993
(51) Int. Cl.: H04B 7/26, H04L 5/00, H04Q 7/24

(54) **Procédé de transmission de données entre des équipements de communication connectés à une infrastructure de communication**
Verfahren zur Datenübertragung zwischen über eine Kommunikationsinfrastruktur verbundenen Kommunikationsanlagen
Method for transmitting data between communication equipments connected to a communication infrastructure

(30) Priorité: 30.12.1992 FR 9215932
(43) Date de publication de la demande: 06.07.1994
(73) Titulaire: ALCATEL, 75008 Paris (FR)
(72) Inventeur: Delprat, Marc, F-78150 Le Chesnay (FR)
(74) Mandataire: El Manouni, Josiane

(56) Documents cités:
- WO-A-91/15087
- WO-A-93/00778
- IEICE TRANSACTIONS vol. E75-A, no. 12 , Décembre 1992 , TOKYO JP pages 1702 - 1709 YABUSAKI ET AL. 'Voice Communication Connection Control in Digital Public Land Mobile Networks'
- 41TH IEEE VEHICULAR TECHNOLOGY CONFERENCE Mai 1991 , ST LOUIS, US pages 326 - 332 PAUTET ET AL. 'GSM Protocol Architecture: Radio Sub-System Signalling'

## Description

La présente invention concerne un procédé de transmission de données entre des équipements de communication connectés à une infrastructure de communication.

Dans tout ce qui suit, on désignera par le terme général "données" soit des données de parole, soit des données autres que de la parole, par exemple des données correspondant à des images codées.

Par ailleurs, on désignera par "équipement de communication" soit un équipement connecté à l'infrastructure par voie filaire ou hertzienne (on parlera alors simplement de mobiles ou d'équipements mobiles), soit une interface reliant l'infrastructure à un équipement ou à une autre infrastructure.

Dans un système de radiotéléphonie numérique classique, la parole est transmise sous forme numérique à bas débit, généralement inférieur à 10 kbits/s, par voie hertzienne entre des mobiles et des stations d'émission/réception de base (BTS), appelées plus simplement stations de base, qui assurent l'interface entre ces mobiles et une infrastructure fixe. On dit que la parole est codée selon un format de codage, ce format de codage ayant pour caractéristique notamment le débit de transmission utilisé. Chaque mobile est donc équipé d'un codeur/décodeur de parole (codec). Les infrastructures de télécommunication sont également équipées de codeurs/décodeurs.

Dans le cas de systèmes de radio mobile professionnelle (PMR), une grande partie des communications s'établit entre deux mobiles ou un groupe de mobiles via une ou plusieurs stations de base.

Dans ces situations, on peut :
- soit décoder systématiquement le signal reçu au niveau de la station de base, la parole étant alors transmise dans l'infrastructure à 64 kbits/s ou en mode analogique, c'est-à-dire que dans l'infrastructure, la parole est codée selon un format de codage ayant dans ce cas pour caractéristique soit le débit de transmission utilisé, soit le mode de transmission utilisé, ce deuxième format, utilisé dans l'infrastructure, étant différent de celui utilisé par les mobiles (on remarquera ici que l'utilisation de la dénomination "codeur/décodeur" pour qualifier les dispositifs employés dans l'infrastructure pour faire passer la parole d'un format à l'autre est un abus de langage, et qu'à proprement parler, ces dispositifs sont des transcodeurs),
- soit ne pas mettre en oeuvre de codeur/décodeur au sein de l'infrastructure ; dans le cas où les mobiles impliqués dans une communication sont tous dans une même cellule associée à une station de base, ce qui est une situation assez fréquente en radio mobile professionnelle, l'infrastructure joue alors le rôle de simple "relais".

La première solution, qui suppose d'équiper systématiquement l'ensemble des stations de base de transcodeurs, n'est pas satisfaisante en termes de qualité, d'efficacité et de sécurité des communications.

En effet, comme toute communication de mobile à mobile implique alors au moins un transcodage, à savoir un décodage du format de codage utilisé par les mobiles au format de codage utilisé dans l'infrastructure, puis de nouveau un codage du format utilisé par l'infrastructure au format utilisé par les mobiles, la qualité de la communication est dégradée. En outre, ce transcodage de la parole met inutilement à contribution les liens physiques internes à l'infrastructure puisque la parole est transportée à 64 kbits/s. Par ailleurs, cette solution ne permet pas d'assurer une communication chiffrée de bout en bout et n'offre donc pas la possibilité de sécuriser des communications entre des équipements mobiles ou entre ces derniers et des équipements filaires connectés à l'infrastructure.

La deuxième solution, consistant à ne considérer le réseau que comme un simple relais de communication entre mobiles lorsque ceux-ci sont dans une même cellule, a pour inconvénient de ne pas permettre de connexion à des équipements téléphoniques standards, notamment des terminaux filaires, et des équipements de type PABX.

On connaît en outre le document IEICE Transactions, Vol. E75-A, N°12, Décembre 1992, Tokyo JP, pages 1702-1709, Yabusaki et al: "Voice Communication Connection Control in Digital Public Land Mobile Networks" qui concerne, pour reprendre les mêmes termes, le cas :
- d'une infrastructure de communication constituée par un réseau public mobile,
- d'équipements de communication utilisant un deuxième format, qui sont constitués par des terminaux mobiles, et d'un seul équipement de communication utilisant un premier format, qui est constitué par un réseau public filaire.

Dans ce contexte, ce document envisage différents emplacements possibles, au sein de ladite infrastructure, pour un transcodeur destiné à transformer des données codées selon ledit premier format, en données codées selon ledit deuxième format, et vice versa, dans le cadre d'une communication de données entre un terminal mobile et un terminal fixe raccordé au réseau public fixe.

Il est ainsi envisagé de placer un transcodeur, soit dans une station de base, soit dans un centre de commutation mobile, avec dans ce dernier cas la possibilité de placer ce transcodeur en différents endroits par rapport au commutateur de ce centre de commutation mobile.

Dans le cas de communication entre deux équipements utilisant un deuxième format , en l'occurrence dans le cas de communication entre deux terminaux mobiles communiquant avec deux stations de base, il est proposé de ne pas activer les transcodeurs correspondants, situés en l'occurrence dans le centre de commutation mobile.

Le but de la présente invention est de remédier aux inconvénients précités en proposant un procédé de transmission de données entre des équipements de communication (mobiles, terminaux filaires, équipements de type PABX, etc...) connectés à une infrastructure de communication, qui permette un traitement optimal des communications entre des équipements utilisant un format de codage des données identique à celui utilisé dans l'infrastructure et des équipements susceptibles d'utiliser un format de codage des données différent de celui utilisé dans l'infrastructure.

La présente invention propose à cet effet un procédé de transmission de données entre des équipements de communication connectés à une infrastructure de communication, plusieurs desdits équipements étant susceptible d'utiliser un format de codage desdites données, dit premier format, différent de celui utilisé au sein de ladite infrastructure, dit deuxième format, ladite infrastructure comprenant en outre au moins un transcodeur de données, pour transformer des données codées selon ledit premier format en données codées selon ledit deuxième format, et vice versa,
caractérisé en ce qu'un transcodeur est placé au sein de ladite infrastructure au voisinage de la connexion avec chacun des équipements utilisant ledit premier format, et en ce que ledit procédé consiste, pour chaque transmission de données entre deux au moins desdits équipements :
- à déterminer, en fonction du format de données utilisé par chacun desdits équipements entre lesquels les données doivent être transmises, s'il est nécessaire d'utiliser un transcodeur pour la transmission desdites données,
- dans l'affirmative, à activer le transcodeur le plus proche de l'équipement utilisant ledit premier format, de sorte que lesdites données transitent sous forme codée selon ledit deuxième format dans l'infrastructure et passent dudit premier format audit deuxième format, ou vice versa, le plus près possible de l'équipement utilisant ledit premier format.

Ainsi, la mise en oeuvre du procédé selon l'invention conduit à une meilleure qualité moyenne des communications en évitant tout transcodage inutile, et à un gain substantiel en liens physiques dans le cas de l'application de l'invention à un système de radiotéléphonie mobile, puisque la parole est transportée sous forme codée selon le format de codage utilisé à la fois par l'infrastructure et les équipements mobiles à l'intérieur de l'infrastructure.

Le procédé selon l'invention est particulièrement avantageux lorsque les premier et deuxième formats diffèrent par leur caractéristique de débit de codage des données, le débit du deuxième format étant inférieur à celui du premier format.

Avantageusement, selon l'invention, lorsque la transmission de données est effectuée entre deux équipements mobiles utilisant le deuxième format, aucun transcodeur n'est activé, les données étant transportées sous forme codée selon le deuxième format au sein de l'infrastructure.

Lorsque la transmission de données est effectuée entre un équipement mobile utilisant le deuxième format et un équipement externe connecté par voie filaire à l'infrastructure et utilisant le premier format, le transcodeur choisi est celui situé au point de connexion de l'équipement à l'infrastructure ou le plus près possible du point de connexion. Dans le cas d'une transmission de données chiffrées, aucun transcodeur n'est choisi, les données étant transportées sous forme codée au sein du réseau, de sorte que la communication peut rester chiffrée de bout en bout.

Une infrastructure pour la mise en oeuvre du procédé selon l'invention comprend des premiers moyens pour déterminer, en fonction du format de données utilisé par chacun des équipements entre lesquels les données doivent être transmises, s'il est nécessaire d'utiliser un transcodeur pour la transmission des données et des deuxièmes moyens pour, dans l'affirmative, activer le transcodeur le plus proche de l'équipement utilisant le premier format.

Cette infrastructure peut comprendre des stations d'émission/réception de base reliées à un centre de traitement et de commutation, lui-même relié à ou comprenant des interfaces de communication entre l'infrastructure et des équipements externes connectés par des liens utilisant le premier format à l'infrastructure, et les transcodeurs sont disposés au sein des interfaces.

Lorsque les stations d'émission/réception de base sont directement connectées à des équipements de communication par l'intermédiaire de liens utilisant le premier format, elles sont équipées de transcodeurs. Dans ce cas, les premiers et deuxièmes moyens peuvent être compris dans chaque station d'émission/réception de base, ces dernières comprenant en outre des bases de données comprenant les caractéristiques des mobiles résidants et des mobiles visiteurs nécessaires à la détermination effectuée par les premiers moyens.

D'autres particularités et avantages de l'invention apparaîtront encore dans la description ci-après.

Aux dessins annexés donnés à titre d'exemples non limitatifs :
- la figure 1 est un schéma synoptique d'un système de communication mobile comprenant une infrastructure de communication mettant en oeuvre le procédé selon l'invention,
- la figure 2 illustre six modes caractéristiques de transmission de données entre un équipement mobile et des équipements de communication connectés à l'infrastructure précitée.

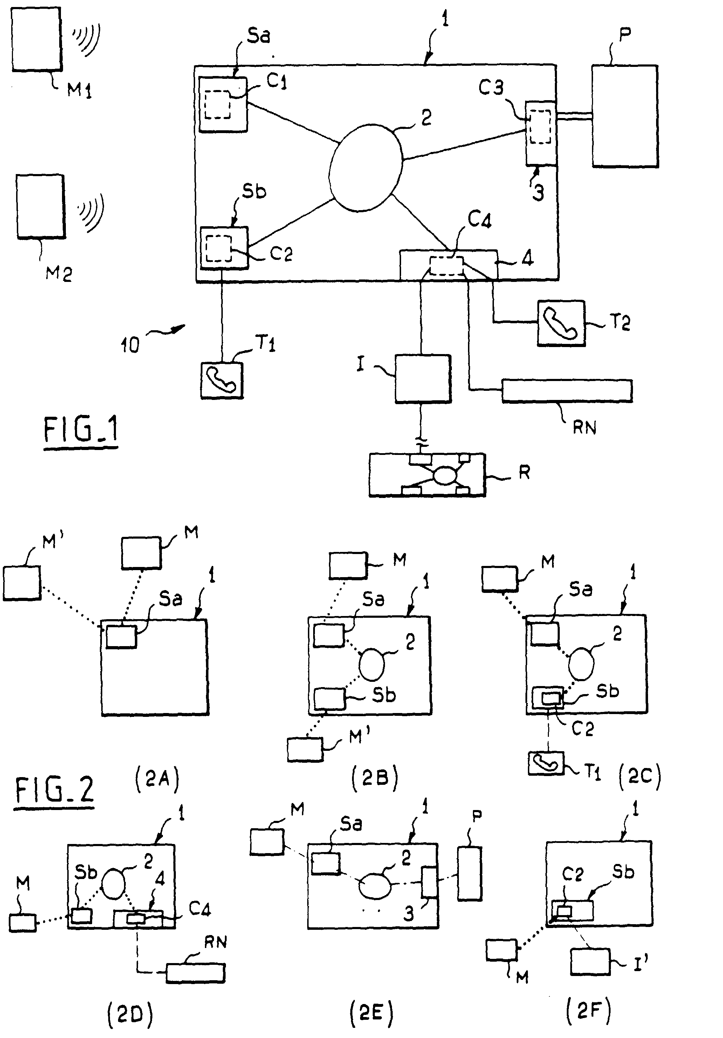

On va maintenant décrire, en référence à la figure 1, un exemple de mise en oeuvre du procédé selon l'invention dans un système 10 de communication mobile, par exemple un réseau de communication mobile professionnel, comprenant des équipements d'émission/réception mobiles M1, M2 "connectés" par voie radio à une infrastructure fixe de communication 1 comportant des stations d'émission/réception de base Sa, Sb, un centre de traitement et de commutation 2 et des interfaces de communication 3, 4 entre l'infrastructure 1 et des équipements externes connectés par voie filaire, par exemple un central P de type PABX, un terminal téléphonique T2, un réseau de communication RN, par exemple de type RNIS (Réseau numérique à Intégration de Service), ou encore une interface inter-système I, permettant l'interfaçage avec un autre réseau de communication professionnel R. Les stations de base Sa, Sb gèrent chacune une cellule de communication radio et peuvent également gérer directement des communications avec des équipements reliés par voie filaire, par exemple un poste téléphonique T1.

Les stations de base Sa, Sb et les interfaces 3, 4 constituent des emplacements possibles pour accueillir des codeurs/décodeurs de parole (transcodeurs) C1, C2, C3, C4 intervenant dans la mise en oeuvre du procédé de transmission de données selon l'invention. En effet, ces emplacements périphériques permettent de limiter les opérations de transcodage aux situations où elles sont réellement indispensables, par exemple lorsque l'un des équipements concernés ne peut accepter que de la parole codée selon un format (premier format) différent de celui utilisé par les équipements mobiles et au sein de l'infrastructure 1 (deuxième format). Dans tous les cas où de la parole peut transiter sous forme codée selon le deuxième format au sein de l'infrastructure 1, les codeurs/décodeurs ne sont pas activés.

En pratique, on peut concevoir une infrastructure disposant de codeurs/décodeurs aux emplacements "stratégiques", à savoir au sein des interfaces reliant l'infrastructure 1 avec des équipements externes par l'intermédiaire de liens physiques à haut débit numérique, supérieur ou égal à 64 kbits/seconde, ou analogiques. On peut également concevoir un équipement systématique des stations de base avec des codeurs/décodeurs pour permettre un accès direct depuis ces stations de base à des équipements de communication, tels que des réseaux RNIS.

Le procédé selon l'invention offre la possibilité de ne mettre en oeuvre et de n'activer que le codeur/décodeur indispensable en fonction des caractéristiques de la communication.

Ainsi, en référence à la figure 2 qui illustre les principales configurations d'appel rencontrées en pratique, une première configuration (2A) concerne une communication (transmission de données, et en particulier de parole) entre deux équipements mobiles M, M', cette communication étant dite intracellulaire car elle n'implique qu'une seule station de base Sa. Dans cette première configuration, la transmission de la parole peut être effectuée intégralement sous forme codée (qui sera symbolisée pour l'ensemble de la figure 2 par des pointillés), c'est-à-dire selon le format de codage utilisé par l'infrastructure radio et les équipements radio (deuxième format), les opérations de codage et de décodage étant réalisées au sein des mobiles M, M' et la station de base n'agissant que comme un simple relais.

Dans une seconde configuration (2B) concernant un échange de parole entre un mobile M dépendant géographiquement d'une première cellule gérée par une première station de base Sa et un second mobile M' dépendant géographiquement d'une seconde cellule gérée par une seconde station de base Sb, la parole peut également être transportée au sein de l'infrastructure 1 intégralement sous forme codée et aucun codeur/décodeur n'est activé à l'issue de l'étape de détermination destinée à savoir si l'utilisation d'un codeur/décodeur est nécessaire.

En revanche, lorsqu'une communication est demandée entre un mobile M, associé à une station de base Sa, et un terminal téléphonique filaire T1, connecté par exemple à une seconde station de base Sb, en référence à la configuration (2C), il est alors nécessaire d'effectuer une opération de codage/décodage au niveau de cette seconde station de base Sb et d'activer le codeur/décodeur C2 que cette dernière abrite. On constate ainsi qu'avec le procédé selon l'invention, la parole transite sous forme codée selon le format (deuxième format) utilisé par l'infrastructure (inférieur à 10 kbit/s) au sein de cette dernière et n'est "décodée", c'est-à-dire codée au format (premier format) utilisé par les équipements externes (64 kbit/s ou mode analogique), qu'au dernier moment, lorsque cela devient indispensable. La parole est alors transmise entre la station de base Sb et le terminal T1 sous forme "décodée", analogique ou numérique (transmission représentée en figure 2 sous la forme de traits discontinus).

Lorsqu'une interface est commune à plusieurs équipements, en référence à la figure 1, par exemple un réseau RN à intégration de service, une interface inter-système I et un terminal téléphonique filaire T2, le codeur/décodeur C4 peut être mis en commun et partagé temporellement.

En référence à la configuration (2D), si une communication est initiée entre un mobile M rattaché à la station de base Sb et un réseau RN connecté à l'infrastructure 1 via l'interface 4, une première partie de la transmission est réalisée sous forme codée (entre le mobile M et l'interface 4 via la station de base Sb et le centre de commutation 2) et une seconde partie est effectuée sous forme décodée entre l'interface 4 et le réseau RN, le codeur/décodeur C4 ayant été préalablement choisi et activé.

Lorsqu'il s'agit de transmettre une information cryptée entre un mobile M et un équipement externe P, ou entre deux mobiles, aucun codeur/décodeur n'est activé sur le chemin de transmission, en référence à la configuration (2E). Ainsi, la communication reste chiffrée de bout en bout.

Par ailleurs, si un accès direct à un équipement externe l'utilisant le premier format de codage des données, par exemple un central téléphonique ou un réseau, est prévu à partir d'une station de base Sb, en référence à la configuration (2F), il faut alors nécessairement positionner un codeur/décodeur C2 au sein de cette station de base.

Plus généralement, les stations de base devront contenir un codeur/décodeur dans toutes les configurations où est prévu un accès direct à un ou plusieurs équipements externes supposant une transmission d'informations numériques codées selon un format de codage différent de celui utilisé dans l'infrastructure.

Lorsque la transmission de données doit avoir lieu entre un équipement mobile (M1 par exemple) rattaché à une station de base appartenant à l'infrastructure 1, et un (ou plusieurs) autre équipement mobile, rattaché à une station de base appartenant à l'infrastructure de communication du réseau PMR R (voir figure 1), utilisant le même format de codage des données que l'infrastructure 1, les données peuvent être intégralement transmises sous forme codée d'une infrastructure à l'autre, et aucun codeur/décodeur n'est activé.

Le procédé peut être avantageusement appliqué à des systèmes de communication radio professionnels utilisés par exemple par des flottes de taxis, d'ambulances ou de police et convient notamment aux futurs systèmes numériques utilisant la norme européenne TETRA.

Le choix des codeurs/décodeurs à activer au sein de l'infrastructure peut être décidé soit au niveau des stations de base en utilisant des bases de données, contenant notamment les caractéristiques des mobiles résidants et des mobiles visiteurs nécessaires à la détermination de la nécessité d'utiliser un codeur/décodeur, soit au niveau d'une unité centrale de l'infrastructure.

Bien sûr, la présente invention n'est pas limitée aux exemples qui viennent d'être décrits et de nombreux aménagements peuvent être apportés à ces exemples sans sortir du cadre de l'invention.

Ainsi, le procédé selon l'invention peut être appliqué pour des appels impliquant n'importe quel équipement communiquant avec le réseau, quel que soit le support physique de communication et la nature des interfaces de connexion.

## Revendications

1. Procédé de transmission de données entre des équipements de communication connectés à une infrastructure de communication (1), plusieurs desdits équipements étant susceptible d'utiliser un format de codage desdites données, dit premier format, différent de celui utilisé au sein de ladite infrastructure (1), dit deuxième format, ladite infrastructure (1) comprenant en outre au moins un transcodeur de données, pour transformer des données codées selon ledit premier format en données codées selon ledit deuxième format, et vice versa,
caractérisé en ce qu'un transcodeur (C1, C2, C3, C4) est placé au sein de ladite infrastructure (1) au voisinage de la connexion avec chacun des équipements utilisant ledit premier format, et en ce que ledit procédé consiste, pour chaque transmission de données entre deux au moins desdits équipements :
- à déterminer, en fonction du format de données utilisé par chacun desdits équipements entre lesquels les données doivent être transmises, s'il est nécessaire d'utiliser un transcodeur pour la transmission desdites données,
- dans l'affirmative, à activer le transcodeur le plus proche de l'équipement utilisant ledit premier format, de sorte que lesdites données transitent sous forme codée selon ledit deuxième format dans l'infrastructure et passent dudit premier format audit deuxième format, ou vice versa, le plus près possible de l'équipement utilisant ledit premier format.

2. Procédé selon la revendication 1 caractérisé en ce que ledit premier format et ledit deuxième format diffèrent par leur débit caractéristique de codage des données, le débit dudit deuxième format étant inférieur au débit dudit premier format.

3. Procédé selon l'une des revendications 1 ou 2, caractérisé en ce que, lorsque ladite transmission de données est effectuée entre deux équipements mobiles (M1, M2), utilisant ledit deuxième format, aucun transcodeur n'est activé, les données étant transportées sous forme codée selon ledit deuxième format au sein de l'infrastructure (1).

4. Procédé selon l'une des revendications 1 à 3 caractérisé en ce que, lorsque ladite transmission de données est effectuée entre un équipement mobile (M1, M2) utilisant ledit deuxième format, et un équipement externe (T1, T2, P, I, RN) connecté par voie filaire à l'infrastructure (1), et utilisant ledit premier format, le transcodeur choisi (C2, C3, C4) est celui situé au point de connexion dudit équipement (T1, T2, P, I, RN) à l'infrastructure (1) ou le plus près possible dudit point de connexion.

5. Procédé selon l'une des revendications 1 à 4 caractérisé en ce que, dans le cas d'une transmission de données chiffrées, aucun transcodeur n'est choisi, lesdites données étant transportées sous forme codée au sein du réseau.

6. Procédé selon l'une des revendications 1 à 5 caractérisé en ce qu'un transcodeur (C4) situé en un emplacement donné de l'infrastructure (1) et activé à l'issue d'une étape de détermination peut être partagé dans le temps entre plusieurs équipements (I, RN, T2) connectés à l'infrastructure (1) à cet emplacement.

7. Infrastructure de communication pour la mise en oeuvre du procédé selon l'une des revendications 1 à 6 caractérisée en ce qu'elle comprend des premiers moyens pour déterminer, en fonction du format de données utilisé par chacun desdits équipements entre lesquels les données doivent être transmises, s'il est nécessaire d'utiliser un transcodeur pour la transmission desdites données et des deuxièmes moyens pour, dans l'affirmative, activer le transcodeur le plus proche de l'équipement utilisant ledit premier format.

8. Infrastructure selon la revendication 7 caractérisée en ce qu'elle comprend des stations d'émission/réception de base (Sa, Sb) reliées à un centre de traitement et de commutation (2), lui-même relié à des interfaces de communication (3, 4) entre ladite infrastructure (1) et des équipements externes (P, T2, RN, I) connectés par des liens utilisant ledit premier format à ladite infrastructure, et en ce que lesdits transcodeurs (C3, C4) sont disposés au sein desdites interfaces (3, 4).

9. Infrastructure selon la revendication 8 caractérisée en ce que, lorsque lesdites stations de base (Sa, Sb) sont directement connectées à des équipements de communication (T1) par l'intermédiaire de liens utilisant ledit premier format, elles sont équipées de transcodeurs (C2).

10. Infrastructure selon l'une des revendications 8 ou 9 caractérisée en ce que lesdits premiers et deuxièmes moyens sont compris dans chacune desdites stations de base, ces dernières comprenant en outre des bases de données comprenant les caractéristiques des mobiles résidants et des mobiles visiteurs nécessaires à la détermination effectuée par lesdits premiers moyens.

11. Application du procédé selon l'une des revendications 1 à 6 à un système de radio mobile professionnel numérique (PMR).

## Patentansprüche

1. Verfahren zur Datenübertragung zwischen Kommunikationsgeräten, die mit einer Kommunikationsinfrastruktur (1) verbunden sind, wobei mehrere dieser Geräte in der Lage sind, ein als erstes Format bezeichnetes Daten-Codierungsformat zu verwenden, das von dem, das im Inneren der Infrastruktur (1) verwendet wird, als zweites Format bezeichnet, verschieden ist, wobei die Infrastruktur (1) außerdem wenigstens einen Daten-Codewandler zum Umwandeln von nach dem ersten Format codierten Daten in nach dem zweiten Format codierte Daten und umgekehrt umfasst,
**dadurch gekennzeichnet**, dass ein Codewandler (C1, C2, C3, C4) im Inneren der Infrastruktur (1) in der Nähe der Verbindungsstelle mit jedem der Geräte, die das erste Format benutzen, plaziert ist, und dass das Verfahren für jede Datenübertragung zwischen wenigstens zwei der Geräte folgende Schritte umfasst:
- Bestimmung, in Abhängigkeit vom Datenformat, das von jedem der Geräte verwendet wird, zwischen denen die Daten übertragen werden sollen, ob es notwendig ist, einen Codewandler für die Übertragung der Daten zu verwenden,
- wenn ja, Aktivierung des dem Geräte, das das erste Format verwendet, am nächsten liegenden Codewandlers, so dass die Daten in nach dem zweiten Format codierter Form in der Infrastruktur durchlaufen und vom ersten Format in das zweite Format oder umgekehrt so nah wie möglich an dem Geräte übergehen, das das erste Format verwendet.

2. Verfahren nach Anspruch 1, dadurch gekennzeichnet, dass das erste Format und das zweite Format in ihrer charakteristischen Rate der Codierung von Daten unterscheiden, wobei die Rate des zweiten Formats unterhalb der Rate des ersten Formates liegt.

3. Verfahren nach Anspruch 1 oder 2, dadurch gekennzeichnet, dass wenn die Datenübertragung zwischen zwei mobilen Geräten (M1,M2) stattfindet, die das zweite Format benutzen, kein Codewandler aktiviert wird und die Daten in nach dem zweiten Format codierter Form im Inneren der Infrastruktur (1) übertragen werden.

4. Verfahren nach einem der Ansprüche 1 bis 3, dadurch gekennzeichnet, dass wenn die Datenübertragung zwischen einem mobilen Geräte (M1, M2), das das zweite Format verwendet, und einem externen Gerät (T1, T2, P, I, RN), das über Kabel mit der Infrastruktur (1) verbunden ist und das erste Format verwendet, stattfindet, der ausgewählte Codewandler (C2, C3, C4) der ist, der an der Verbindungsstelle des Gerätes (T1, T2, P, I, RN) mit der Infrastruktur (1) oder so nah wie möglich an dieser Verbindungsstelle liegt.

5. Verfahren nach einem der Ansprüche 1 bis 4, dadurch gekennzeichnet, dass im Falle einer chiffrierten Datenübertragung kein Codewandler gewählt wird, wobei die Daten in codierter Form innerhalb des Netzes transportiert werden.

6. Verfahren nach einem der Ansprüche 1 bis 5, dadurch gekennzeichnet, dass ein Codewandler (C4), der an einem gegebenen Platz in der Infrastruktur (1) liegt und der am Ende eines Bestimmungsschrittes aktiviert wird, zeitlich zwischen mehreren Geräten (I, RN, T2) aufgeteilt werden kann, die mit der Infrastruktur (1) an diesem Platz verbunden sind.

7. Kommunikationsinfrastruktur zur Durchführung des Verfahrens nach einem der Ansprüche 1 bis 6, dadurch gekennzeichnet, dass sie umfasst: erste Mittel zum Bestimmen, in Abhängigkeit vom Datenformat, das von jedem der Geräte benutzt wird, zwischen denen die Daten übertragen werden sollen, ob ein Codewandler für die Übertragung der Daten verwendet werden muss, und zweite Mittel, um bejahendenfalls denjenigen Codewandler zu aktivieren, der dem Gerät, das das erste Format verwendet, am nächsten liegt.

8. Infrastruktur nach Anspruch 7, dadurch gekennzeichnet, dass sie Sende-/Empfangs-Basisstationen (Sa, Sb) umfasst, die mit einer Verarbeitungs- und Vermittlungszentrale (2) verbunden sind, die ihrerseits mit Kommunikationsschnittstellen (3, 4) zwischen der Infrastruktur (1) und externen Geräten (P, T2, RN, I) verbunden ist, die über Bindeglieder, die das erste Datenformat verwenden, mit der Infrastruktur (1) verbunden sind, und dass die Codewandler (C3, C4) im Inneren der Schnittstellen (3, 4) angeordnet sind.

9. Infrastruktur nach Anspruch 8, dadurch gekennzeichnet, dass die Basisstationen (Sa, Sb), wenn sie direkt an Kommunikationsgeräten (T1) über das erste Format verwendende Bindeglieder angeschlossen sind, mit Codewandlern (C2) ausgestattet sind.

10. Infrastruktur nach einem der Ansprüche 8 oder 9, dadurch gekennzeichnet, dass die ersten und zweiten Mittel in jeder Basisstation enthalten sind, wobei Letztere ferner Datenbanken umfassen, die die Merkmale der residenten und der besuchenden mobilen Endgeräte umfassen, die für die von den ersten Mittel durchgeführte Bestimmung erforderlich sind.

11. Verwendung des Verfahrens nach einem der Ansprüche 1 bis 6 bei einem digitalen gewerblichen Kraftfahrzeugfunksystem (PMR).

## Claims

1. Method of transmitting data between communication equipments connected to a communication infrastructure (1), at least one of said equipments being adapted to use a first data coding format different from a second format used within said infrastructure (1) which further comprises at least one data transcoder for converting data coded to said first format into data coded to said second format and vice versa, characterised in that a transcoder (C1, C2, C3, C4) is provided in said infrastructure (1) in the vicinity of the connection to each of the equipments using said first format and said method comprises the following steps for each transmission of data between at least two of said equipments:
- determining on the basis of the data format used by each of said equipments between which data is to be transmitted whether it is necessary to use a transcoder to transmit said data, and
- if so, activating the transcoder nearest the equipment using said first format so that said data is conveyed in coded form to said second format in the infrastructure and changes from said first format to said second format or vice versa as close as possible to the equipment using said first format.

2. Method according to claim 1 characterised in that said first format and said second format differ in terms of their characteristic data coding bit rate, the bit rate of said second format being lower than the bit rate of said first format.

3. Method according to claim 1 or claim 2 characterised in that when said data is transmitted between two mobile equipments (M1, M2) using said second format no transcoder is activated and said data is conveyed in a form coded to said second format within said infrastructure (1).

4. Method according to any one of claims 1 to 3 characterised in that when said data is transmitted between a mobile equipment (M1, M2) using said second format and an external equipment (T1, T2, P, I, RN) connected by wires to said infrastructure (1) and using said first format the transcoder chosen (C2, C3, C4) is that located where said equipment (T1, T2, P, I, RN) is connected to said infrastructure (1) or as close as possible to said connection point.

5. Method according to any one of claims 1 to 4 characterised in that in the case of transmission of encrypted data no transcoder is chosen and said data is conveyed in coded form within said network.

6. Method according to any one of claims 1 to 5 characterised in that a transcoder (C4) at a given location in said infrastructure (1) and activated at the end of a determination process is adapted to be time-shared between a plurality of equipments (I, RN, T2) connected to said infrastructure (1) at this location.

7. Communication infrastructure for implementing the method according to any one of claims 1 to 6 characterised in that it comprises first means for determining from the data format used for each of said equipments between which the data is transmitted whether it is necessary to use a transcoder to transmit said data and second means for activating the transcoder nearest the equipment using said first format if this is necessary.

8. Infrastructure according to claim 7 comprising base transceiver stations (5a, 5b) connected to a processing and switching centre (2) itself connected to interfaces for communication (3, 4) between said infrastructure (1) and external equipments (P, T2, RN, I) connected by wires using said first format to said infrastructure and characterised in that said transcoders (C3, C4) are in said interfaces (3, 4).

9. Infrastructure according to claim 8 characterised in that when said base stations (5a, 5b) are connected directly to communication equipments (T1) by links using said first format they are equipped with transcoders (C2).

10. Infrastructure according to claim 8 or claim 9 characterised in that said first and second means are provided in each of said base stations which further comprise databases holding characteristics of resident and visitor mobiles needed for the determination process carried out by said first means.

11. Application of the process according to any one of claims 1 to 6 to a digital professional mobile radio (PMR) system.
